Europäisches Patentamt

European Patent Office

Office européen des brevets

(19)

(11) Veröffentlichungsnummer: **0 147 648**
**A1**

(12) **EUROPÄISCHE PATENTANMELDUNG**

(21) Anmeldenummer: **84114375.3**

(22) Anmeldetag: **28.11.84**

(51) Int. Cl.⁴: **G 21 C 17/00**
**F 22 B 37/00, G 01 M 3/00**
**F 16 C 1/20, G 01 N 29/00**
**G 01 N 27/90**

(30) Priorität: **15.12.83 CH 6688/83**

(43) Veröffentlichungstag der Anmeldung:
**10.07.85 Patentblatt 85/28**

(84) Benannte Vertragsstaaten:
**CH DE FR LI SE**

(71) Anmelder: **BBC Aktiengesellschaft Brown, Boveri & Cie.**
**Haselstrasse**
**CH-5401 Baden(CH)**

(72) Erfinder: **Scholz, Arthur, Dipl.-Phys.**
**Schönbühlstrasse 46**
**CH-5430 Wettingen(CH)**

(54) **Vorrichtung zur Inspektion und Wartung von Rohren mit kleinen Krümmungsradien.**

(57) Zur Detektion von Fehlern im metallischen Werkstoff von Rohren (7, 7') in Maschinen und Anlagen mit sehr kleinen Rohrbögen, zur optischen Signalisation und Reinigung deren innerer Oberfläche werden Ultraschall- und Wirbelstromprüfsondenkörper (10, 10'), Lichtleiter (18) und mechanische Betätigungseinrichtungen (16, 16') in einer allseits biegsamen Schlauchsonde, welche in drei verschiedenen Ausführungsarten ausgebildet ist, integriert. In einer ersten Ausführungsart weisen mehrere hintereinander angeordnete Führungskörper (1, 3) Kugeführungsflächen (F) auf, welche rotationssymmetrisch zu zentralen zylindrischen Aussparungen (2, 4) in den Führungskörpern (1, 3) angeordnet sind. In diesen Kulgelführungsflächen (F) stützen sich benachbarte Führungskörper (1, 3) ab und stehen miteinander in gelenkiger Wirkverbindung. Innerhalb der Aussparungen (2, 4) der Führungskörper (1, 3) befindet sich ein flexibles Verbindungselement (5), welches durch Verspannelemente (6a, 6b; 21a, 21b; 25a, 25b) die Schlauchsonde zusammenhält.

In einer zweiten Ausführungsart sind die Führungskörper (12) hohlzylindrisch ausgebildet und weisen Falze (12') auf, zum Eingriff in die Falze (12") benachbarter Führungskörper (12).

In einer dritten Ausführungsart sind die Führungskörper als Gelenkkupplung (26) ausgebildet und stehen über Verbindungsbügel (27, 27' ; 28, 28') gelenkig miteinander in Verbindung.

FIG.1

146/83

15.12.83
KT/eh

- 1 -

## Vorrichtung zur Inspektion und Wartung von Rohren mit kleinen Krümmungsradien

Bei der Erfindung wird ausgegangen von einer allseits biegsamen Schlauchsonde nach dem Oberbegriff der Patentansprüche 1, 6 und 7.

Mit diesem Oberbegriff nimmt diese Erfindung auf einen Stand der Technik Bezug, wie er in der DE-AS 28 37 488 beschrieben ist. Die bekannte Einrichtung - sie dient zur Wirbelstromprüfung von Rohren in Wärmetauschern - wird in ein Rohr eines U-Rohrbündels geschoben, wobei die Schubvorrichtung in ihrer Längsrichtung zwei miteinander verbundene Teile umfasst, von denen der eine, der Prüfsonde zugekehrten Teil, dünner als das Rohr und von gerundeten, voneinander beabstandeten Zentrierkörpern umgeben ist, während der andere Teil als Schubschlauch ausgebildet ist. Der der Prüfsonde zugekehrte Teil ist ebenfalls als Schubschlauch ausgebildet und weist eine grössere Flexibilität als der der Prüfsonde abgekehrte Schubschlauch auf. Der der Prüfsonde zugekehrte Schubschlauch besitzt eine Länge, die annähernd gleich der Länge des längsten, mit der Sonde zu prüfenden Bogens des U-Rohrbündels ist.

Im Firmenkatalog der Firma Zetec, 1320 N.W. Mall, Jassaquah, WA 980 27, USA (undatiert) mit dem Titel "Eddy Current Probes Spring Flex" ist ein metallischer schraubenfederförmiger Vorschubschlauch zum Einbringen von Wirbelstromprüfsonden in U-Rohre dargestellt, wobei radial angeordnete Distanzhalter im sondennahen Bereich für eine Prüfsondenzentrierung sorgen.

Zerstörungsfreie Werkstoffprüfverfahren werden angewendet, um Metallrohre auf einwandfreie Materialbeschaffenheit hin zu detektieren und/oder die innere Oberfläche der Rohre hinsichtlich eventuell inkrustierter Anhaftungen oder auf Korrosionsschäden hin optisch zu kontrollieren. Metallrohre finden bekanntermassen Verwendung in Wärmetauschern wie beispielsweise Dampferzeugern, Kondensatoren, Vorwärmern und Kühlern in konventionellen Kraftwerken und Kernkraftwerken, sowie für Kühl- und Hydraulikrohre im maschinentechnischen und elektrotechnischen Apparatebau. Bei Kernkraftwerken ist es wichtig, fehlerhafte Stellen in den Rohren sofort zu erkennen, um zu vermeiden, dass eine kontaminierte Flüssigkeit in ein nichtkontaminiertes Flüssigkeitskühlsystem gelangt.

Die zu prüfenden Rohre weisen normalerweise eine Länge von 0,2 m bis zu hundert Metern auf, ihr Innendurchmesser beträgt 8 mm bis 50 mm und ihr Krümmungsradius liegt in einem Bereich zwischen 35 mm und 400 mm.

In der Praxis sind jedoch auch Rohrbögen zu prüfen, deren Krümmungsradien kleiner als 35 mm sind, wobei unter Umständen mehrere Rohrbögen unmittelbar hintereinander folgen, welche in einer Ebene liegen oder sich aber auch über mehrere Ebenen erstrecken können.

Beim Einführen der Prüfsonde in Rohrkrümmungen steigt der an der Sondenspitze angreifende Reibwiderstand durch einwirkende Seitenkräfte im Verhältnis zu den geraden Rohrabschnitten stark an. Ab einem bestimmten Wert erhöht sich die Reibfläche zwischen Sonde und Innenoberfläche des Rohres entsprechend einer Expontialfunktion. Dementsprechend ist auch eine grössere Vorschubkraft notwendig, welche eine höhere Steifigkeit des Vorschubschlauches erforderlich macht, die aber wiederum die Reibung an der Rohrinnenwand erhöht. Zusätzlich erschwerend für den Sondenvorschub wirken sich auch oftmals nicht vermeidbare Ovalisierungen an den Rohrkrümmungen aus.

Aus vorstehend erwähnten Gründen kann trotz geeigneter Dimensionierung und ausreichender Knickfestigkeit des Vorschubschlauches der Reibwiderstand so gross werden, dass ein Sondenvorschub über die gesamte zu prüfende Rohrlänge, insbesondere bei sehr kleinen Krümmungsradien der Rohrbögen sehr erschwert oder gänzlich verunmöglicht wird.

Zur Verringerung der Reibfläche zwischen Prüfsonde und Rohr und zur Verringerung des an der Sondenspitze angreifenden Reibwiderstandes beim Umlenken der Sonde in den Rohrbögen kann der Füllfaktor, d.h. das Verhältnis vom Durchmesser der Prüfsonde zum Rohrnenndurchmesser gesenkt werden. Diese Massnahme hat aber zur Folge, dass sich die Längskrafteinleitung in die Prüfsonde auf die Zentrierung der Prüfsonde und somit auch auf die Prüfempfindlichkeit ungünstig auswirkt. Ausserdem kann es dazu führen, dass eine einwandfreie Fehlerdetektion überhaupt nicht mehr sichergestellt ist.

Die in den Patentansprüchen gekennzeichnete Erfindung löst die Aufgabe, eine allseits biegsame Schlauchsonde zur Fehlerdetektion im Werkstoff von gekrümmten Rohren und/oder zur optischen Signalisation und/oder zur mechanischen Reinigung der inneren Oberfläche von Rohren anzugeben, mit welcher das Hindurchführen durch Rohrbögen mit sehr kleinen Krümmungsradien erleichtert und eine einwandfreie Zentrierung des Sondenkörpers der Schlauchsonde möglich ist.

Wesentliches Kennzeichen der Erfindung sind die allseits gelenkige Wirkverbindung benachbarter Führungskörper, welche sich über die ganze Schlauchsondenlänge erstreckt, sowie die konsequente Ausnutzung der Seitenführungskräfte auf die Führungskörper der Schlauchsonde durch die innere Oberfläche des Rohres, wodurch grosse Vorschubkräfte in Rohrlängsrichtung übertragen werden können.

Mit der erfindungsgemässen Schlauchsonde wird ermöglicht, mehrere aufeinanderfolgende Rohrbögen mit sehr kleinen Krümmungsradien ($<$ 35 mm) einwandfrei zu durchfahren, wobei die Rohrbögen in mehreren Ebenen liegen können. Infolge der konvexen Krümmung der Führungskörper der Schlauchsonde verringert sich die Reibfläche zwischen Schlauchsonde und Rohr und damit auch die für das Blockieren des Sondenvorschubes verantwortliche Haftreibung.

Durch eine freie Wahl des Werkstoffes - Kunststoffmaterial oder Metall - kann die Gleiteigenschaft der Führungskörper der Schlauchsonde sowie deren Haltbarkeit günstig beeinflusst werden.

Selbst bei Füllfaktoren von $F < 0,8$, d.h. bei einem Verhältnis vom Aussendurchmesser der Führungskörper der Schlauchsonde zum Innendurchmesser des Rohres $< 0,8$ ist eine stabile Selbstzentrierung der Sondenkörper möglich. Die Führungskörper lenken im sondennahen Bereich wellenförmig aus und berühren lediglich punktuell die innere Oberfläche des Rohres. Die Schlauchsonde kann durch Rohre mit inkrustierten Anhaftungen an deren innerer Oberfläche, beispielsweise Kalkablagerungen oder rosthaltige Ablagerungen oder selbst durch verstopfte Rohre einwandfrei hindurchgeführt werden, indem die Rohre zunächst mechanisch gereinigt und dann detektiert werden. Die punktuelle Auflage der Führungskörper der Schlauchsonde, sowie deren geeignete Werkstoffwahl, verringern die Gefahr von Beschädigungen an eventuell aufgetragenen Schutzschichten gegen korrodierende Einflüsse an der inneren Rohroberfläche.

Die Erfindung wird nachstehend anhand von Ausführungsbeispielen erläutert:

Es zeigen:

Fig. 1   eine teilweise geschnittene Ansicht einer Schlauchsonde in einer ersten Ausführungsart mit einem
        Wirbelstromprüfkopf,

Fig. 2   eine teilweise geschnittene Ansicht einer Schlauchsonde in einer ersten Ausführungsart mit einem
        Ultraschallschwinger,

Fig. 3   eine teilweise geschnittene Ansicht einer Schlauchsonde in einer ersten Ausführungsart mit einer
        mechanischen Betätigungseinrichtung,

Fig. 4   eine teilweise geschnittene Ansicht einer Schlauchsonde in einer ersten Ausführungsart mit einem
        Endoskop,

- 6 -

Fig. 5    einen Teilausschnitt in vergrössertem Massstab
         gemäss Fig. 4,

Fig. 6    eine teilweise geschnittene Ansicht einer Schlauchsonde in einer zweiten Ausführungsart mit einer
         mechanischen Betätigungseinrichtung,

Fig. 7    einen Teilausschnitt in vergrössertem Massstab
         gemäss Fig. 6,

Fig. 8    eine teilweise geschnittene Ansicht einer Schlauchsonde in einer dritten Ausführungsart,

Fig. 9    einen ersten Querschnitt der Schlauchsonde gemäss
         Fig. 8,

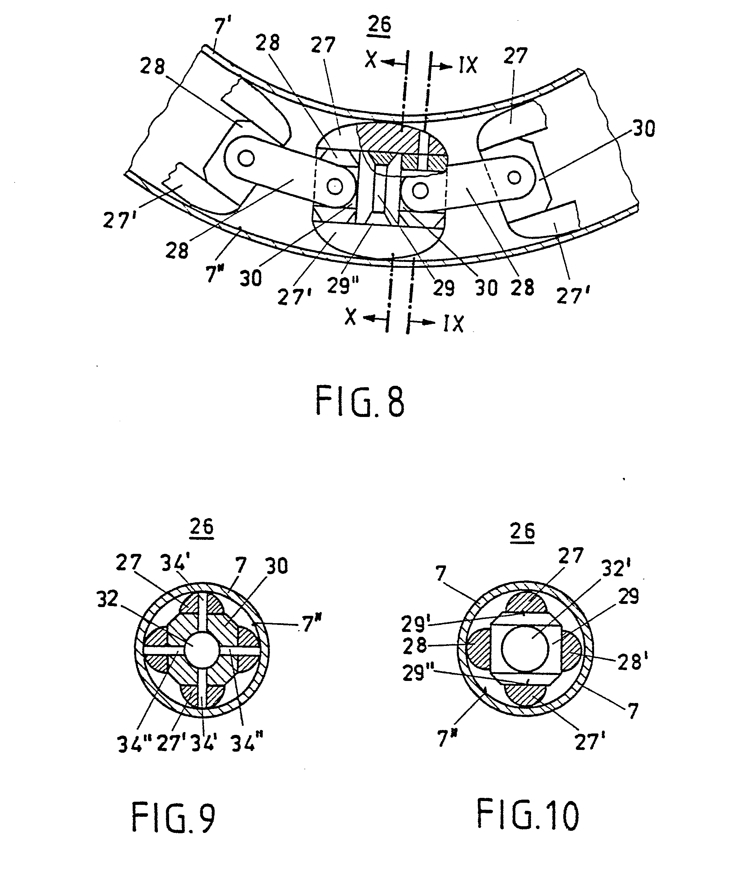

Fig. 10 einen zweiten Querschnitt der Schlauchsonde
         gemäss Fig. 8, und

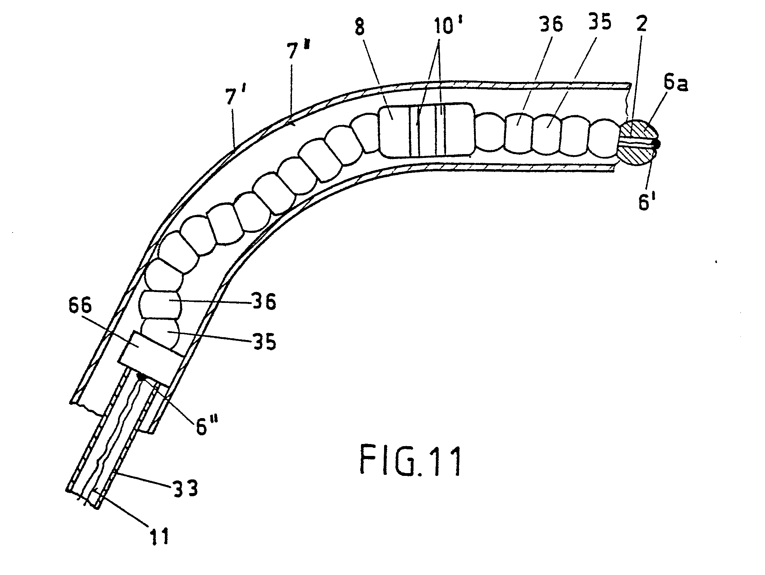

Fig. 11 eine teilweise geschnittene Ansicht einer Schlauchsonde in einer vierten Ausführungsart.

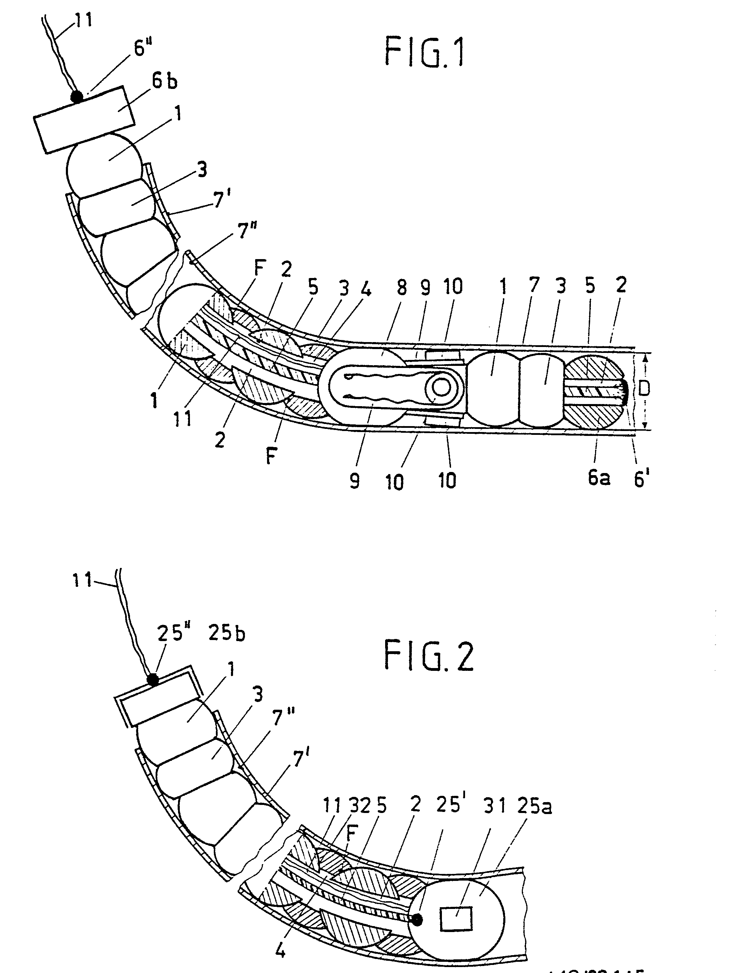

Fig. 1 zeigt eine teilweise geschnittene Ansicht einer
allseits biegsamen Schlauchsonde in einer ersten Ausführungsart mit einem Wirbelstromprüfkopf 8, 9, 10, welche
sich in einem geraden -7 und einem gekrümmten Rohrabschnitt 7' befindet. In Fig. 1 ist sowohl der gerade -7,
als auch der gekrümmte Rohrabschnitt in geschnittener
Darstellung gezeigt. Die Schlauchsonde ist gemäss Fig. 1
in drei Teile unterteilt: den Sondenkörper 8, 9, 10,
einen vorderen Teil der Schlauchsonde bestehend aus
Führungskörpern 1, 3 und einen hinteren Teil der Schlauchsonde, ebenfalls bestehend aus Führungskörpern 1, 3.
Zwischen benachbarten kugelförmigen Führungskörpern 1
sind - sowohl im vorderen, als auch im hinteren Teil -
doppelkugelpfannen 3 angeordnet. Die kugelförmigen Füh-

0147648
146/83

rungskörper 1 weisen zentrale zylindrische Aussparungen 2 und die Doppelkugelpfannen 3 ebenfalls zentrale zylindrische Aussparungen 4 auf. In diesen zentralen Aussparungen 2, 4 ist ein Verbindungselement 5 angeordnet, wodurch die Führungskörper 1, 3 über die ganze Länge der Schlauchsonde zusammengehalten sind. Die Aussparungen 4 der Doppelkugelpfannen 3 haben einen grösseren Durchmesser als die Aussparungen 2 der kugelförmigen Führungskörper 1. Hierdurch wird beim Hindurchführen der Schlauchsonde durch sehr kleine Rohrbögen, wobei die Führungskörper 1, 3 stark ausgelenkt werden, vermieden, dass das Verbindungselement 5 durch die Kanten der Aussparungen 2, 4 beschädigt werden könnte. Am vorderen endseitigen Teil der Schlauchsonde befindet sich ein kugelförmig ausgebildetes Verspannelement 6a, in dem das Verbindungselement 5 an der Verspannstelle 6' befestigt ist. Am hinteren endseitigen Teil der Schlauchsonde befindet sich das Verspannelement 6b, in dem das Verbindungselement 5 an der Verspannstelle 6" ebenfalls befestigt ist.

Die wechselweise hintereinander angeordneten kugelförmigen Führungskörper 1 und die Doppelkugelpfannen 3 stehen miteinander in gelenkiger Wirkverbindung, wobei sich benachbarte Führungskörper 1, 3 gegenseitig in der rotationssymmetrisch zu den zentralen Aussparungen 2, 4 ausgebildeten Kugelführungsflächen F abstützen.

Obwohl die Führungskörper 1, 3 durch das Verbindungselement 5 relativ fest verspannt sind, so ist doch eine unbehinderte Auslenkung der Führungskörper 1, 3 in den Kugelführungsflächen F selbst bei von Rohrbögen mit sehr kleinen Krümmungsradien von $< 35$ mm gewährleistet. Im Ausführungsbeispiel gemäss Fig. 1 wurden ein Aussendurchmesser der kugelförmigen Führungskörper 1 und der Doppelkugelpfannen 3 gewählt, der annähernd gleich dem Innendurchmesser D des Rohres 7, 7' ist.

Die allseits biegsame Schlauchsonde ist jedoch nicht auf das in Fig. 1 dargestellte Ausführungsbeispiel beschränkt, wobei wechselweise hintereinander angeordnete kugelförmige Führungskörper 1 und Doppelkugelpfannen 3 miteinander in gelenkiger Wirkverbindung stehen. Es ist ebenso möglich, dass die Schlauchsonde sich nur aus kugelförmigen Führungskörpern 1 zusammensetzt, und dass die Doppelkugelpfannen vollständig entfallen.

Einmal können sich bei einer derartigen Ausführungsart benachbarte, auf einem zentralen Verbindungselement 5 aufgereihte kugelförmige Führungskörper 1 gegenseitig abstützen. Zum anderen können aber auch kalottenförmige Ausnehmungen in den kugelförmigen Führungskörper 1, welche rotationssymmetrisch zu den zentralen Aussparungen 2 in den Führungskörpern 1 angeordnet sind, ausgebildet sein. Diese kalottenförmigen Ausnehmungen bilden die Kugelführungsflächen F, in welche sich benachbarte kugelförmige Führungskörper 1 abstützen und miteinander in gelenkiger Wirkverbindung stehen.

Die Schlauchsonde als solche besitzt bei Druckbeanspruchung keine Eigensteifigkeit (Knickfestigkeit). Erst nach Einführen der Schlauchsonde in das Rohr 7, 7', stützen sich deren Führungskörper 1, 3 an der inneren Oberfläche 7" des Rohres 7, 7' ab. Sie erhalten dadurch eine Seitenführung und Vorschubkräfte können in Längsrichtung des Rohres 7, 7' übertragen werden.

In Fig. 1 ist die allseits biegsame Schlauchsonde mit einem Prüfsondenträger 8 versehen, an dem vier jeweils um 90° versetzte radial angeordnete Wirbelstromspulen 10 über federnde Halteteile 9 befestigt sind. In Fig. 1 ist ein Halteteil 9 mit der Wirbelstromspule 10 vollständig in Draufsicht und zwei Halteteile 9 mit Wirbelstromspulen 10 in Seitenansicht zu sehen, wobei von diesen beiden Halteteilen 9 nur der vordere Teil sichtbar ist, der hintere Teil ist durch den Prüfsondenträger 8 verdeckt. Elektrische Zuleitungskabel 11 werden von ausserhalb der Schlauchsonde durch die zentralen Aussparungen 2, 4 der Wirbelstromspule 10 zugeführt und sind in Fig. 1 gut erkennbar. Die elektrischen Zuleitungskabel 11 sind ausserhalb der Schlauchsonde mit einer in Fig. 1 nicht dargestellten Messeinrichtung verbunden, womit eventuelle Fehler im Werkstoff des Rohres 7, 7' detektiert werden können.

Das Einführen der allseits biegsamen Schlauchsonde in das Rohr 7, 7' wird manuell vorgenommen, indem zuerst die vorderen Führungskörper 1, 3, dann der Sondenkörper 8, 9, 10 und schliesslich die hinter dem Sondenkörper 8, 9, 10 angeordneten Führungskörper 1, 3 in das Rohrinnere eingeschoben werden. Die Translation der Vorschubkraft der Schlauchsonde in Längsrichtung des Rohres 7, 7' erfolgt über die gelenkig miteinander in Wirkverbindung stehenden Führungskörper 1, 3, wobei, wie bereits erwähnt, die Seitenführung der Führungskörper 1, 3 durch die innere Oberfläche 7" des Rohres 7, 7' erreicht wird. Das Zurückholen der Schlauchsonde aus dem Rohr geschieht ebenfalls manuell durch Ziehen am Verspannelement 6b.

Zur Erleichterung des Einführens der allseits biegsamen Schlauchsonde, die, wie bereits erwähnt, ausserhalb des Rohres 7, 7' keine Eigensteifigkeit (Knickfestigkeit) besitzt, ist es besonders vorteilhaft, die Schlauchsonde ausserhalb des zu prüfenden Rohres 7, 7' in einer rohrförmigen Hülle, die in Fig. 1 nicht dargestellt ist, zu führen. Die Führungskörper 1, 3 bestehen vorzugsweise aus einer Stahllegierung, welche vor der Bearbeitung weichgeglüht und nach der Bearbeitung vergütet wird. Es besteht aber auch durchaus die Möglichkeit, dass die Führungskörper 1, 3 aus einer Aluminiumlegierung bestehen, wobei deren Formgebung mittels Spritzgussverfahrens erfolgt. Darüber hinaus sind auch Führungskörper 1, 3 aus Kunststoffmaterial anwendbar, die beispielsweise durch Pressen in Matrizen hergestellt werden. Das Verbindungselement 5 besteht vorzugsweise aus einem Kunststoffmaterial.

In Fig. 2 ist eine teilweise geschnittene Ansicht einer Schlauchsonde in derselben Ausführungsart wie in Fig. 1 zu sehen, jedoch ist in dieser Darstellung ein Ultraschallschwinger 31 angeordnet. Dieser befindet sich in einem Prüfsondenträger 25a. Der Prüfsondenträger 25a dient gleichzeitig als endseitig vorderes Verspannelement für das Verbindungselement 5, wobei das Verbindungselement 5 an der Verspannstelle 25' am Prüfsondenträger 25a befestigt ist. An der dem Prüfsondenträger 25a gegenüberliegenden Ende ist das Verbindungselement 5 in der Verspannstelle 25" im endseitig hinteren Verspannelement 25b befestigt. Auf diese Weise wird die Schlauchsonde zusammengehalten. Die Funktion der Führungskörper 1, 3 ist die gleiche, wie sie in Fig. 1 ausführlich beschrieben wurde.

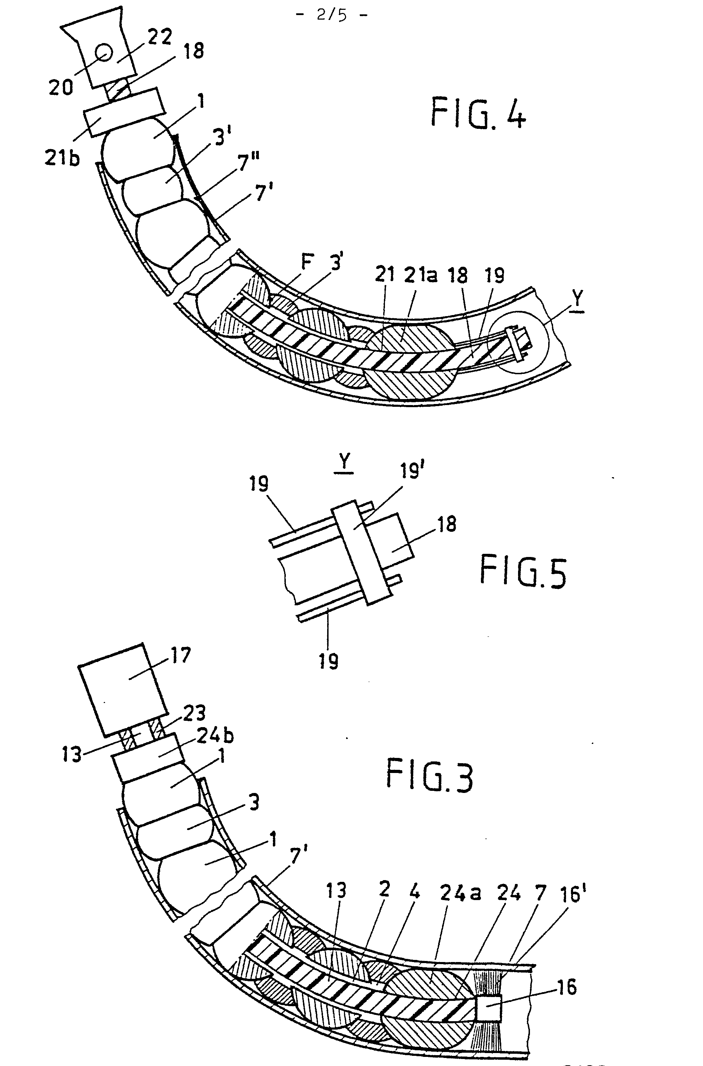

Fig. 3 zeigt in teilweise geschnittener Ansicht dieselbe Schlauchsonde, wie in Fig. 1 dargestellt. Anstelle des Verbindungselementes 5 gemäss Fig. 1 befindet sich aber in den Aussparungen 2, 4 der Führungskörper 1, 3, die wiederum wechselweise hintereinander angeordnet sind und in gemeinsamer gelenkiger Wirkverbindung stehen, eine Welle 13. Die Welle 13 ist an dem einen Ende mit einer mechanischen Betätigungseinrichtung 16, 16' und an dem anderen Ende mit einem Motor 17 verbunden. Die Welle 13 wird in einer Bohrung 24 in dem der mechanischen Betätigungseinrichtung 16, 16' zugewandten Abschlussteil 24a und in einer in Fig. 3 nicht sichtbaren Bohrung im gegenüberliegenden Abschlussteil 24b gelagert. Die Verspannung der Führungskörper 1, 3 der Schlauchsonde und somit auch der Welle 13 erfolgt durch eine Verspannhülse 23, welche sich zwischen dem Motor 17
und dem Abschlussteil 24b befindet und dem Kernteil
16 der mechanischen Betätigungseinrichtung 16, 16'.
An der äusseren Oberfläche des Kernteiles 16 der mechanischen Betätigungseinrichtung 16, 16' sind Stahlbürsten
16' befestigt, deren Aussendurchmesser dem Innendurchmesser des Rohres 7, 7' entspricht. Der Motor 17 ist
nur schematisch dargestellt, die elektrischen Anschlusskabel wurden aus Gründen besserer Uebersicht weggelassen.

In Fig. 4 ist im teilweisen Längsschnitt eine sich in
einem gekrümmten Rohrabschnitt 7' befindende allseits
biegsamen Schlauchsonde gemäss Fig. 1 dargestellt.

In der Ausführungsart gemäss Fig. 4 tritt aber anstelle
des Verbindungselementes 5, wie es in Fig. 1 gezeigt
ist, diesmal ein Lichtleiter 18. Der Lichtleiter 18
befindet sich in den zentralen Aussparungen 2, 4 der
Führungskörper 1, 3', wobei die Führungskörper 1, 3
in der gleichen Anordnung wie in Fig. 1 wechselweise
hintereinandergereiht sind und gemeinsam in gelenkiger
Wirkverbindung stehen. Im Ausführungsbeispiel gemäss
Fig. 4 weisen jedoch die Doppelkugelpfannen 3' einen
kleineren äusseren Durchmesser auf als die kugelförmig
ausgebildeten Führungskörper 1. Dies bewirkt, dass lediglich die Führungskörper 1 an der inneren Oberfläche
des Rohres 7, 7' zur Anlage kommen. Dadurch wird die
Auflagefläche der Schlauchsonde an der Rohrwandung und
somit auch die Reibung zwischen Schlauchsonde und dem
Rohr 7, 7' verringert. Am vorderen endseitigen Teil
der Schlauchsonde befindet sich ein ellipsenförmig ausgebildetes Verspannelement 21a, in dessen Bohrung 21 der
Lichtleiter 18 fest anliegt und fixiert ist. Am hinteren
endseitigen Teil der Schlauchsonde befindet sich das
Verspannelement 21b, in dem der Lichtleiter 18 gleichfalls
fest fixiert ist.

Gemäss Fig. 4 ist die Schlauchsonde als ein Endoskop zur optischen Signalisation der inneren Oberfläche 7" des Rohres 7, 7' ausgebildet. Das Endoskop besteht im wesentlichen aus einem mittels eines Doppelbowdenzuges 19 verstellbaren Ende des Lichtleiters 18 und einem Okular 22.

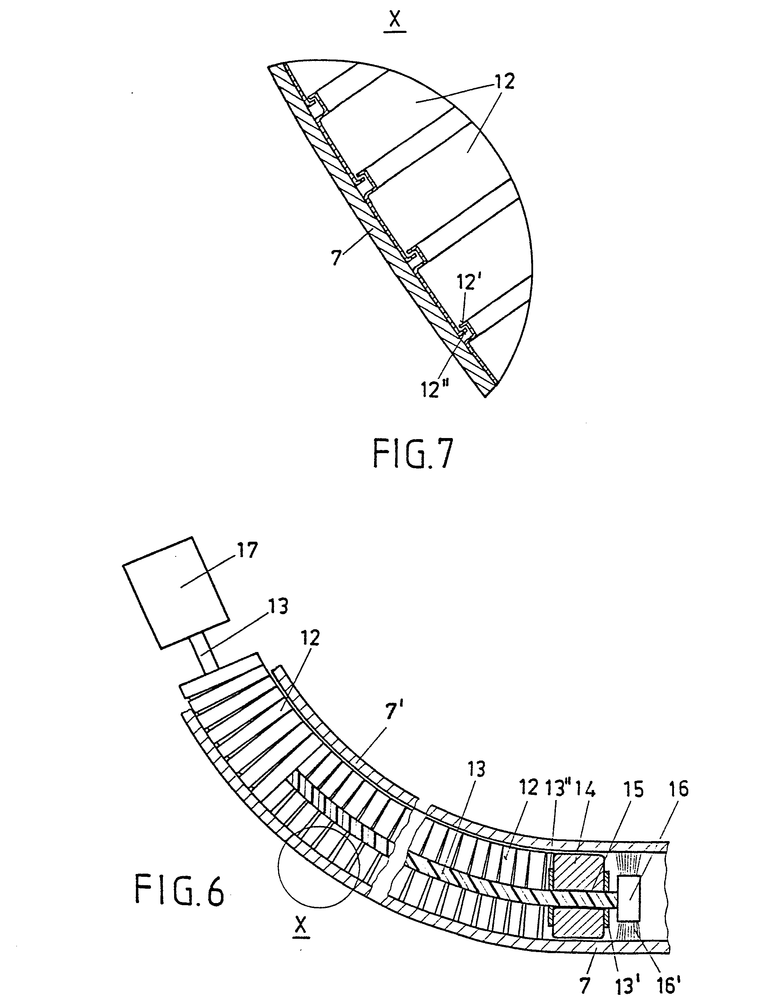

Der Doppelbowdenzug 19 wird gemäss Fig. 4 und 5 ausserhalb des Lichtleiters 18, durch in Fig. 4 nicht dargestellte Oeffnungen im Verspannelement 21a, sowie durch die zentralen Aussparungen 2, 4 der Führungskörper 1, 3", ebenfalls in Fig. 4 nicht dargestellt, zu einer Verstelleinrichtung 20 des Doppelbowdenzuges 19 geführt.

Wie in Fig. 5 in vergrösserter Darstellung veranschaulicht, ist der Doppelbowdenzug 19 mittels eines Verspannteiles 19' am Lichtleiter 18 befestigt. Das Ende des Lichtleiters 18 ist durch Betätigung der Einrichtung 20 verstellbar, so dass die gesamte innere Oberfläche des Rohres 7, 7' optisch signalisiert werden kann.

Fig. 6 zeigt eine teilweise geschnittene Ansicht einer sich in einem geraden und gekrümmten Rohrabschnitt 7, 7' befindenden zweiten Ausführungsart der allseits biegsamen Schlauchsonde. Hierbei sind die Führungskörper 12 hohlzylindrisch ausgebildet und weisen Falze 12' auf, welche mit Spiel in die Falze 12" benachbarter Führungskörper 12 eingreifen.

In Fig. 7 ist der Eingriff der Falze 12' in benachbarte Falze 12" in vergrösserter Teilschnittdarstellung verdeutlicht.

Gemäss Fig. 6 und 7 bestehen die Führungskörper 12 aus ringförmigen Metallprofilstreifen. Die Profilstreifen können sich jedoch auch schraubenförmig über die ganze Länge der Schlauchsonde fortsetzen, wobei ebenfalls Falze 12' in benachbarte Falze 12" mit Spiel eingreifen und die Führungskörper 12 zusammenhalten. Innerhalb der Schlauchsonde 12 ist eine flexible Welle 13 angeordnet, welche einerseits mit einer mechanischen Betätigungseinrichtung 16, 16' und andererseits mit einem Antriebsmotor 17 verbunden ist. An der mechanischen Betätigungseinrichtung 16, 16' sind radial angeordnete Stahlbürsten 16' zum Reinigen der inneren Oberfläche 7" des Rohres 7, 7' befestigt. An dem der Betätigungseinrichtung 16, 16' zugewandten Ende der Schlauchsonde befindet sich ein Abschlussteil 14 mit einer zentralen zylindrischen Bohrung 15 durch welche die Welle 13 geführt ist. An dem dem Antriebsmotor 17 zugewandten Ende der Schlauchsonde befindet sich gleichfalls ein Abschlussteil, welches jedoch in Fig. 6 nicht zu sehen ist. Beide Abschlussteile, das eine -14 und das andere nicht sichtbare, sind in die an den Enden der Schlauchsonde sich befindenden hohlzylindrischen Führungskörper 12 eingepresst. Beidseits des Abschlussteiles 14 sind auf der Welle 13 Einstellringe 13', 13" befestigt, welche unmittelbar am Abschlussteil 14 anliegen. Diese Einstellringe 13', 13" zentrieren die Welle 13 in axialer Richtung.

In Fig. 8, 9 und 10 ist die erfindungsgemässe Schlauchsonde in einer dritten Ausführungsart als eine an sich bekannte Gelenkkupplung 26 (Kardangelenk) dargestellt. Fig. 8 zeigt eine teilweise geschnittene Ansicht der Sonde in einem geschnittenen gekrümmten Rohrabschnitt 7'. In Fig. 9 und 10 ist jeweils ein Querschnitt gemäss Fig. 8 zu sehen.

Jeweils zwei prismatisch ausgebildete Gelenkkörper 30 sind mittels Hohlnieten 34' als Drehachsen mit dem oberen -27 bzw. dem unteren Verbindungsbügel 27' drehbar verbunden, wobei die ebenen Flächen der Gelenkkörper 30 mit den ebenen Flächen der Verbindungsbügel 27, 27' zur Anlage kommen. Zur Verringerung der Reibung sind die Flächen der Gelenkkörper 30 facettiert. Nach aussen hin sind die Verbindungsbügel 27, 27' konvex ausgebildet und liegen jeweils punktuell an der inneren Oberfläche 7" des Rohres 7, 7' an. Zur mechanischen Versteifung der Verbindungsbügel 27, 27' sind, wie aus Fig. 8 und 10 ersichtlich ist, Querverbindungsstege 29 vorgesehen, die beispielsweise mittels Verkleben an den Stellen 29', 29" mit den Verbindungsbügeln 27, 27' verbunden sind. Wie in Fig. 8, 9 und 10 deutlich erkennbar ist, sind senkrecht zu den Verbindungsbügeln 27, 27' seitliche Verbindungsbügel 28, 28' angeordnet, die ebenfalls mittels Hohlnieten 34" drehbar an den Gelenkkörpern 30 gelagert sind. Die Verbindungsbügel 27, 27' und 28, 28' sind gleich ausgebildet.

Es ist selbstverständlich, dass die Verbindungsbügel 28, 28' zur mechanischen Versteifung gleichfalls mittels Querverbindungsstegen verbunden sind. Die Querverbindungsstege für die Verbindungsbügel 28, 28' sind jedoch in Fig. 8, 9 und 10 nicht ersichtlich. Ueber die Verbindungsbügel 27, 27' und 28, 28' sind sämtliche Gelenkkörper 30 der Schlauchsonde miteinander verbunden. Die Schlauchsonde liegt gemäss Fig. 8, 9 und 10 jeweils einmal mit dem Scheitelpunkt der konvexen Aussenflächen der Verbindungsbügel 27, 27' an der inneren Oberfläche 7" des Rohres 7, 7' an und zum anderen jeweils mit dem Scheitelpunkt der konvexen Aussenflächen der Verbindungsbügel 28, 28'. Die Auflagepunkte der Sonde nach Fig. 8, 9 und 10 sind paarweise alternierend jeweils 90° um die Rohrachse gedreht und axial versetzt. Innerhalb der Gelenkkörper 30 sind zentrale Aussparungen 32 und innerhalb der Querverbindungsstege 29 sind ebenfalls zentrale Aussparungen 32' vorgesehen, durch welches beispielsweise elektrische Zuleitungskabel, in Fig. 8, 9 und 10 nicht dargestellt, oder eine biegsame Welle, in Fig. 8, 9 und 10 ebenfalls nicht dargestellt, geführt werden können.

Mit der in Fig. 8, 9 und 10 dargestellten kardanischen Schlauchsonde sind Dreh- und Vorschubkräfte übertragbar. Diese Ausführungsart der Schlauchsonde eignet sich insbesondere zur rotierenden Detektion der inneren Oberfläche 7" des Rohres 7, 7' mittels der vorstehend aufgeführten Prüfverfahren.

In Fig. 11 ist in einer teilweise geschnittenen Ansicht eine vierte Ausführungsart der Schlauchsonde dargestellt. Wie in Fig. 11 ersichtlich, befindet sich die Schlauchsonde lediglich im prüfsondennahen Bereich, und zwar mit einem Teil vor der Prüfsonde 8, 10' und mit einem Teil hinter der Prüfsonde 8, 10'. An die Schlauchsonde ist, ein, im Verhältnis zu dieser, viel längerer steifer Führungsschlauch 33 angeordnet, wie er aus dem Stand der Technik bereits bekannt ist, wobei in Fig. 11 lediglich ein Teil davon dargestellt ist. Bei dieser Ausführungsart ist der Führungsschlauch 33 für den Vorschub bestimmt, und die Schlauchsonde für die Zentrierung der Prüfsonde, welche im vorliegenden Ausführungsbeispiel aus dem Prüfsondenträger 8 und zwei koaxial angeordneten Wirbelstromspulen 10' besteht. Die kugelförmigen Führungskörper 35 und die als Doppelkugelpfannen ausgebildeten Führungskörper 36 sind wiederum wechselweise hintereinander angeordnet und stehen miteinander in gelenkiger Wirkverbindung.
Die Seitenführung der Führungskörper 35, 36 durch die innere Oberfläche 7" des Rohres 7, 7' wird gemäss Fig. 11 in einer anderen Weise genutzt als die Seitenführung, wie sie in Fig. 1 ausführlich beschrieben wurde. In Fig. 11 ist das Verhältnis von drei aufeinanderfolgenden Führungskörpern 35, 36 zum Innendurchmesser D des Rohres 7, 7' annähernd 2 : 1. D.h. der Aussendurchmesser der Führungskörper 35, 36 ist wesentlich kleiner als der Innendurchmesser D des Rohres 7, 7'. Demzufolge lenkt die Schlauchsonde wellenförmig aus, und zwar vor und auch hinter der Prüfsonde 8, 10', wobei die Wellenlänge - Abstand von Wellenberg zu Wellenberg - annähernd konstant ist.

Dies bewirkt eine stabile Zentrierung der Prüfsonde 8, 10', unabhängig davon, in welchem Rohrabschnitt - gerade oder gekrümmt - sich die Prüfsonde 8, 10' befindet. Diese vorstehend geschilderte Zentrierung ist gleichermassen in ovalisierten Rohrabschnitten und hinter verengten Rohrkrümmungen erreichbar.

Mit den vorstehend geschilderten Ausführungsarten der erfindungsgemässen Schlauchsonde gemäss Fig. 1 bis 11 können Rohre bis zu hundert Meter Länge, mit einer grossen Anzahl aufeinanderfolgender Rohrbögen mit sehr kleinen Krümmungsradien, auf Fehler des Werkstoffes hin detektiert, deren innere Oberfläche optisch signalisiert und deren innere Oberfläche mechanisch gereinigt werden.

P a t e n t a n s p r ü c h e

1. Allseits biegsame Schlauchsonde für Rohre, insbesondere
zur Verwendung in Rohren von Maschinen und Anlagen,
welche mehrere hintereinander angeordnete Führungskörper (1) und wenigstens einen damit in Wirkverbindung
stehenden Sondenkörper (10, 10', 31) aufweist, wobei
die Führungskörper (1) zentrale Aussparungen (2)
haben und auf einem zentralen Verbindungselement
(5) aufgereiht sind, dadurch gekennzeichnet, dass
jeder Führungskörper (1) mindestens eine Führungsfläche
(F) rotationssymmetrisch zu diesen Aussparungen (2)
aufweist, an welcher sich benachbarte Führungskörper
(1) abstützen und miteinander in gelenkiger Verbindung
stehen, dass das Verhältnis von der Gesamtlänge von
drei aufeinanderfolgenden Führungskörpern (1) zum
Innendurchmesser des Rohres (7, 7') grösser als 1,5 : 1,
vorzugsweise 2,5 : 1 gewählt ist, und die Führungskörper (1) durch die innere Oberfläche (7") des Rohres
(7, 7') seitlich geführt sind, dass die Führungskörper
(1) über endseitige Verspannelemente (6a, 6b; 21a, 21b;
25a, 25b) über die gesamte Länge der Schlauchsonde
verspannbar sind.

2. Schlauchsonde nach Anspruch 1, dadurch gekennzeichnet,
dass die Führungskörper (1) kugelförmig und die zentralen Aussparungen (2) zylindrisch ausgebildet sind.

3. Schlauchsonde nach Anspruch 1 und 2, dadurch gekennzeichnet, dass zwischen benachbarten kugelförmigen
Führungskörpern (1) einer ersten Art, Führungskörper
(3) einer zweiten Art vorgesehen sind, die als Doppelkugelpfannen ausgebildet und mit einer zylindrischen
Aussparung (4) versehen sind, und dass die Doppelkugelpfannen beidseitig eine Führungsfläche (F) rotationssymmetrisch zu diesen Aussparungen (4) aufweisen, an welchen sich benachbarte Führungskörper (1) abstützen und miteinander in gelenkiger Verbindung stehen (Fig. 1, 2, 3, 4).

4. Schlauchsonde nach Anspruch 3, dadurch gekennzeichnet, dass der Durchmesser der Aussparungen (4) der Doppelkugelpfannen (3) grösser ist als derjenige der kugelförmigen Führungskörper (1) (Fig. 1, 2, 3, 4,).

5. Schlauchsonde nach Anspruch 3 und 4, dadurch gekennzeichnet, dass der äussere Durchmesser der Doppelkugelpfannen (3) sich vom äusseren Durchmesser der kugelförmigen Führungskörper (1) unterscheidet (Fig. 4).

6. Allseits biegsame Schlauchsonde für Rohre, insbesondere zur Verwendung in Rohren von Maschinen und Anlagen, welche mehrere hintereinander angeordnete Führungskörper (12) und wenigstens einen damit in Wirkverbindung stehenden Sondenkörper (10, 10', 31) aufweist, wobei die Führungskörper (12) zentrale Aussparungen haben, dadurch gekennzeichnet, dass die Führungskörper (12) hohlzylindrisch ausgebildet sind, dass Falze (12') mit Spiel zum Eingriff in die Falze (12") benachbarter Führungskörper (12), vorgesehen sind, und dass das Verhältnis von Aussendurchmesser der Führungskörper (12) zum Innendurchmesser des Rohres (7, 7') mindestens 1 : 2 vorzugsweise 2 : 3 gewählt ist, und die Führungskörper (12) durch die innere Oberfläche des Rohres (7") seitlich geführt sind (Fig. 6).

7. Allseits biegsame Schlauchsonde für Rohre, insbesondere zur Verwendung in Rohren von Maschinen und Anlagen, welche mehrere hintereinander angeordnete Führungskörper (26) und wenigstens einen damit in Wirkverbindung stehenden Sondenkörper (10, 10', 31) aufweist,

0147648
146/83

wobei die Führungskörper (26) zentrale Aussparungen (32, 32') haben, dadurch gekennzeichnet, dass das Verhältnis von Aussendurchmesser der Gelenkkupplung (26) zum Innendurchmesser des Rohres (7, 7') 2 : 3, vorzugsweise 3 : 4 gewählt ist, und die Gelenkkupplung (26) durch die innere Oberfläche (7") des Rohres (7, 7') seitlich geführt ist (Fig. 8).

8. Schlauchsonde nach einem der Ansprüche 1 bis 7, dadurch gekennzeichnet, dass das zentrale Verbindungselement (5) ein Lichtleiter (18) ist (Fig. 4).

9. Schlauchsonde nach einem der vorhergehenden Ansprüche 1, 6 oder 7, dadurch gekennzeichnet, dass der Sondenkörper mindestens einen Ultraschallschwinger (31) oder mindestens eine Wirbelstromprüfsonde (10, 10') enthält (Fig. 2).

10. Schlauchsonde nach einem der vorhergehenden Ansprüche 1, 6 oder 7, dadurch gekennzeichnet, dass innerhalb der zentralen Aussparungen (2, 4, 33) der Führungskörper (1, 3, 12, 26) eine flexible Welle (13) angeordnet ist, welche endseitig mit einer mechanischen Betätigungseinrichtung (16, 16') verbunden ist (Fig. 3, 6).

# FIG.1

# FIG.2

FIG. 4

FIG.5

FIG.3

FIG.7

FIG.6

0147648

FIG.8

FIG.9

FIG.10

FIG.11

**0147648**

Nummer der Anmeldung

**EUROPÄISCHER RECHERCHENBERICHT**

Europäisches Patentamt

EP 84 11 4375

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | FR-A-2 368 691 (SHELL INTERNATIONALE RESEARCH MAATSCHAPPIJ BV) * Seite 5, Zeile 36; Seite 6, Zeilen 1-38; Abbildung 3 * | 1,6,7 | G 21 C 17/00 F 22 B 37/00 G 01 M 3/00 F 16 C 1/20 G 01 N 29/00 G 01 N 27/90 |
| A | FR-E- 40 783 (L.A.M. CORSET) * Insgesamt * | 1,3 | |
| A | FR-A-1 134 392 (M.M.C. PIETERSE) * Seite 2, rechte Spalte, Zeilen 17-55; Abbildung 2 * | 1-3,5 | |
| A | DE-A-2 948 493 (KÜSTER & CO.) * Ansprüche; Abbildungen * | 1-5 | |
| A | US-A-2 603 073 (H. NIELD) * Insgesamt * | 6 | RECHERCHIERTE SACHGEBIETE (Int. Cl.4) |
| A | GB-A-1 007 556 (GOLDE) * Seite 3, Zeilen 36-72; Abbildungen 9,10 * | 6 | G 21 C 17/00 G 01 N 29/00 G 01 N 27/00 F 22 B 37/00 B 25 J 5/00 G 01 M 3/00 F 16 C 1/00 |
| A | FR-A- 685 616 (M.A.C. VATINELLE) * Insgesamt * | 1,2,6 | |
| | --- -/- | | |

Der vorliegende Recherchenbericht wurde für alle Patentansprüche erstellt.

| Recherchenort DEN HAAG | Abschlußdatum der Recherche 11-03-1985 | Prüfer ASSI G.A. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

Europäisches Patentamt

**EUROPÄISCHER RECHERCHENBERICHT**

EP 84 11 4375

## EINSCHLÄGIGE DOKUMENTE

Seite 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 061 078 (KRAFTWERK UNION) <br> * Ansprüche 1,16; Abbildungen * | 7,9 | |
| A | US-A-3 437 747 (E.E. SHELDON) <br> * Anspruch 1; Abbildungen * | 8 | |
| A | EP-A-0 090 725 (FRAMATOME) <br><br> * Zusammenfassung; Abbildung 1 * | 1,6,7, 9,10 | |
| D,A | DE-B-2 837 488 (KRAFTWERK UNION) <br> * Insgesamt * | 1,6,7, 9 | |
| A | US-A-3 911 750 (C.L. PRASHER) <br><br> * Zusammenfassung; Abbildungen 1,2 * | 1,2,6, 7,9 | RECHERCHIERTE SACHGEBIETE (Int. Cl.4) |

Der vorliegende Recherchenbericht wurde für alle Patentansprüche erstellt.

| Recherchenort <br> DEN HAAG | Abschlußdatum der Recherche <br> 11-03-1985 | Prüfer <br> ASSI G.A. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03 82